(19)

Europäisches
Patentamt
European
Patent Office
Office européen
des brevets

(11) **EP 4 357 391 A1**

(12) **EUROPEAN PATENT APPLICATION**
published in accordance with Art. 153(4) EPC

(43) Date of publication:
**24.04.2024 Bulletin 2024/17**

(21) Application number: **22840931.4**

(22) Date of filing: **27.01.2022**

(51) International Patent Classification (IPC):
**C08G 69/26** (2006.01)          **C08G 69/28** (2006.01)
**C08L 77/06** (2006.01)

(52) Cooperative Patent Classification (CPC):
**C08G 69/26; C08G 69/28; C08L 77/06**

(86) International application number:
**PCT/CN2022/074273**

(87) International publication number:
**WO 2023/284285 (19.01.2023 Gazette 2023/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.07.2021   CN 202110799801**

(71) Applicants:
• **Cathay Biotech Inc.**
  **Shanghai 201203 (CN)**

• **Cibt America Inc.**
  **Newark DE 19713 (US)**

(72) Inventors:
• **FENG, Wutong**
  **Shanghai 201203 (CN)**
• **ZHAO, Yuanbo**
  **Shanghai 201203 (CN)**
• **LIU, Xiucai**
  **Shanghai 201203 (CN)**

(74) Representative: **karo IP**
**karo IP Patentanwälte**
**Kahlhöfer Rößler Kreuels PartG mbB**
**Postfach 32 01 02**
**40416 Düsseldorf (DE)**

(54) **HIGH-TEMPERATURE-RESISTANT SEMI-AROMATIC COPOLYIMIDE AND PREPARATION METHOD THEREFOR, COMPOSITION, AND MOLDED ARTICLE**

(57)    The present disclosure provides a high temperature resistant semi-aromatic copolyamide, its preparation method, compositions, and molded product. The monomer raw materials of the high temperature resistant semi-aromatic copolyamide comprise diacid monomers and diamine monomers. The diacid monomers include but not limited to aromatic diacid and/or the derivatives of the aromatic diacid and aliphatic diacid. The diamine monomers include but not limited to decamethylene diamine and pentamethylene diamine. The molar ratio of the decamethylene diamine to the pentamethylene diamine is (1-30):1. The high temperature resistant semi-aromatic copolyamide provided in the present disclosure has outstanding heat resistance, mechanical strength, low water absorption, dimensional stability and low yellow index. The present disclosure adopts one-step method which takes water as the reaction medium to prepare the copolyamide PA10T/5T/5X/10X, and has such advantages as environment protection, simple operation, low cost and high production efficiency.

EP 4 357 391 A1

**Description**

**Technical field**

The present disclosure belongs to the field of polymer materials, and specially involves a high temperature resistant semi-aromatic copolyamide and its preparation method and compositions.

**Background of Art**

With the rise of surface mounting technology (SMT) and the development trend of "plastic instead of steel" in the automotive industry, the market demand for high-temperature resistant polyamides has increased sharply. SMT technology requires that the melting point of the material is not less than 215°C, and lead-free solder puts higher requirements for the heat resistance of the material. The increase in combustion temperature of automobile fuel is conducive to the full combustion of fuel, reduction of fuel consumption, and decrease in carbon dioxide and other toxic gas emissions, and the increase in combustion temperature of fuel requires the peripheral parts of the automobile engine to have higher heat resistance. Traditional general-purpose plastics and ordinary engineering plastics have been unable to meet the market demand for heat resistance of materials. The melting point of high-temperature resistant polyamide is higher than 270 °C, and it has excellent short-term and long-term heat resistance. The common high-temperature resistant polyamides are PA46, PA5T, PA6T, PA9T, PA10T, PA11T, PA12T, PA MXD6, PMIA, PPTA and so on. PA10T, its full name is poly (decamethylene terephthalamide). The benzene rings structure of terephthalic acid makes it have high rigidity, heat resistance, mechanical strength and dimensional stability. And the long carbon chain structure of 1, 10-decamethylene diamine makes PA10T have such advantages as melt-processability and low water absorption. In addition, 1, 10-decamethylene diamine can be obtained from castor oil (biological substance) by saponification, ammonification and other steps, so PA10T is a promising bio-based high-temperature resistant polyamide. Similar to other semi-aromatic high temperature resistant polyamides, PA10T also has some disadvantages, such as poor melt fluidity and narrow melt processing window, so other copolymers are often introduced to improve the melt fluidity and reduce the melting point.

The patent CN101759853B provides a method for preparation of a semi-aromatic polyamide: firstly, the monomer and the auxiliary agent are added into the polymerization pot for condensation polymerization to get a prepolymer with low characteristic viscosity, and then the prepolymer is dried and transferred to a viscosifier for solid-phase polycondensation. However, this method will use a variety of equipment and its operation is complex.

**Summery of the invention**

In order to overcome the shortcomings of the existing technologies and products, the present disclosure provides a high temperature resistant semi-aromatic copolyamide and its preparation method, composition and molded product.

The monomer of the copolyamide comprises diacid monomers and diamine monomers, the diacid monomers comprise aromatic diacid and/or the derivatives of the aromatic diacid and aliphatic diacid, the diamine monomers comprise decamethylene diamine and pentamethylene diamine, the molar ratio of the decamethylene diamine to the pentamethylene diamine is (1-30): 1.

Derivatives of aromatic diacid include but are not limited to amides of aromatic diacid and esters of aromatic diacid, such as C1-C10 alkyl esters of aromatic diacid.

1,10-decamethylene diamine (referred to as decamethylene diamine) in the monomer is chemically derived or biological substance-derived 1, 10-decamethylene diamine, and biological substance-derived 1, 10-decamethylene diamine is preferred. 1, 5-pentamethylene diamine (referred to as pentamethylene diamine) in the monomer is chemically derived or biological substance-derived pentamethylene diamine, and biological substance-derived pentamethylene diamine is preferred. Biological substances are a variety of organisms formed by photosynthesis. Biological substance-derived compound refers to the compound prepared using these organisms through biological methods (e.g. biological fermentation). Chemically derived compound refers to the compound prepared by chemical methods.

In some embodiments of the present disclosure, the molar ratio of the decamethylene diamine to the aromatic diacid is 1: (0.7-1.5), and preferably 1:(0.8-1.2); for example, 1:0.98, 1:0.95.

In some embodiments of the present disclosure, the molar ratio of the decamethylene diamine to the pentamethylene diamine is (2-30):1, and preferably (2-20):1; for example, 19:1, 18:1, 10:1, 6.5:1, 4:1.

In some embodiments of the present disclosure, the molar ratio of the diamine monomer to the diacid monomer is (1-1.3):1, and preferably (1-1.1): 1; and more preferably (1-1.06):1, and further more preferably (1.01-1.04):1.

In some embodiments of the present disclosure, the total amount of the diamine monomer and the diacid monomer accounts for 85% and more of the total amount of the monomer raw materials of the copolyamide, preferably 90% or more, more preferably 95% or more, and further more preferably 97% or more, the percentage refers to a molar percentage.

In some embodiments of the present disclosure, the total amount of the decamethylene diamine and the pentamethylene diamine accounts for 85% or more of the total amount of the diamine monomer, preferably 90% or more, and more preferably 95% or more, and the percentage is a molar percentage.

In some embodiments of the present disclosure, the total amount of the aromatic diacid and/or the derivatives of the aromatic diacid, and the aliphatic diacid accounts for 85% or more of the total amount of the diacid monomer, preferably 90% or more, and more preferably 95% or more, the percentage refers to molar percentage.

In some embodiments of the present disclosure, the aromatic diacid is any one of the diacids containing benzene rings with 8 or more carbon atoms, or a combination of two or more thereof, and preferably comprising any one of terephthalic acid, isophthalic acid and phthalic acid, or a combination of two or more thereof. The derivatives of the aromatic diacid comprise but are not limited to any one of benzoyl chloride, dimethyl terephthalate and diethyl terephthalate, or a combination of two or more thereof.

The aliphatic diacid is any one of the aliphatic diacid with 2-18 carbon atoms and a combination thereof, and preferably comprising any one of oxalic acid, malonic acid, succinic acid, glutaric acid, adipic acid, heptanedioic acid, octanedioic acid, azelaic acid, sebacic acid, undecanedioic acid, dodecanedioic acid, tridecanedioic acid, tetradecanedioic acid, pentadecanedioic acid, hexadecanedioic acid, heptadecanedioic acid, octadecanedioic acid, or a combination of two or more thereof.

In some embodiments of the present disclosure, the copolyamide is PA10T/5T/5X/10X. The X represents a structure unit derived from the aliphatic diacid, especially the number of carbon atoms contained in the aliphatic diacid. The aliphatic diacid has the same qualification as described above. T represents terephthalic acid. For example, copolyamide PA10T/5T/56/106 represents the copolyamide prepared by decamethylene diamine, terephthalic acid, pentamethylene diamine and adipic acid.

In some embodiments of the present disclosure, the raw materials of the copolyamide also comprise additives accounting for 0.01%-3% of the total mass of the monomers. The additives include but are not limited to any one of an end-capping agent, a catalyst, flame retardant, an antioxidant, UV absorbent, infrared absorbent, crystallization nucleating agent, fluorescent brightening agent and antistatic agent, or a combination of two or more thereof.

In some embodiments of the present disclosure, the raw materials of the copolyamide also comprise antioxidants accounting for 0.1%-0.5% of total mass of the monomer, and preferably 0.1%-0.3%. The antioxidants are selected from any one of phenolic antioxidant, inorganic phosphate antioxidant, phosphite ester antioxidant and carbon free radical trapping antioxidant, or a combination of two or more thereof.

In some embodiments of the present disclosure, the raw materials of the copolyamide also comprise catalysts accounting for 0-0.07% of total mass of the monomer, and preferably 0.005-0.05%. The catalysts comprise phosphate and hypophosphite, and preferably comprise phosphate of alkali metal and/or alkaline-earth metal, and hypophosphite of alkali metal and/or alkaline-earth metal, and more preferably comprise any one of potassium hypophosphite, sodium hypophosphite, calcium hypophosphite and magnesium hypophosphate, or a combination of two or more thereof. preferably, total mass of the phosphate and the hypophosphite accounts for 85% or more of total mass of catalyst, preferably 90% or more, and more preferably 95% or more.

In some embodiments of the present disclosure, the raw materials of the copolyamide also comprise end-capping agents accounting for 0-1% of total mass of the monomer, preferably 0.1-0.5%, and more preferably 0.15%-0.4%. The end-capping agents comprise any one of C2-C16 aliphatic carboxylic acid and C7-C10 aromatic carboxylic acid or a combination thereof. The structures of the end-capping agents of the aliphatic carboxylic acid are linear-chain monoacid, monoacid with branch chain or monoacid with cyclic structure, and preferably saturated linear-chain monoacid, saturated monoacid with branch chain, or saturated monoacid with cyclic structure. Compared with aliphatic carboxylic acid with liner-chain structure, saturated aliphatic carboxylic acid with cyclic structure has a better effect on reducing polymer YI value, which is mainly because the aliphatic carboxylic acid with cyclic structure has a larger steric hindrance effect, so that the coplanarity of the atomic group is destroyed, and the overlap degree of $\pi$ electrons is reduced, and thus the absorption spectrum moves towards the short wave.

In some preferred embodiments of the present disclosure, the end-capping agent comprises any one of C2-C10 aliphatic carboxylic acid or C7-C10 aromatic carboxylic acid or a combination thereof. The number of carbon atoms of the end-capping agent is, for example, 3, 4, 5, 6, 7, 8, 9.

In some preferred embodiments of the present disclosure, the end-capping agent comprises any one of acetic acid, propionic acid, butyric acid, valeric acid, caproic acid, heptanoic acid, caprylic acid, pelargonic acid, capric acid, trimethylacetic acid, isobutyric acid, benzoic acid, cyclohexanecarboxylic acid, toluic acid, $\alpha$-naphthoic acid, $\beta$-naphthoic acid, methylnaphthoic acid and phenylacetic acid, or a combination of 2 or more thereof.

In some preferred embodiments of the present disclosure, the total mass of the C2-C10 aliphatic carboxylic acid, C7-C10 aromatic carboxylic acid account for 85% or more of total mass of end-capping agent, preferably 90% or more, and more preferably 95% or more.

In some embodiments of the present disclosure, the melting point of the copolyamide is 270°C or more, and preferably 270°C-310°C, for example 280°C, 290°C, 300°C, 305°C.

The relative viscosity of the copolyamide is 1.6-3.2, and preferably 2.2-3.0, and more preferably 2.2-2.6, for example, 2.3, 2.4, 2.5.

The water absorption of the copolyamide is 0.1-1%, and preferably 0.2-0.8%, for example, 0.4%, 0.6% or 0.7%.

The tensile strength of the copolyamide is 50-140MPa, and preferably 60-120MPa, and more preferably 70-110MPa, for example, 80MPa, 90 MPa, 95MPa, 100MPa or 105MPa.

In some embodiments of the present disclosure, the bending strength of the copolyamide is 70-130MPa, preferably 85-130MPa, and more preferably 90-130MPa, for example 100MPa, 105MPa, 110MPa, 115MPa, 120MPa, or 125MPa.

In some embodiments of the present disclosure, the heat distortion temperature of the copolyamide is 95-130°C, and preferably 100-125°C, for example, 105°C, 110°C, 115°C or 120°C.

In some embodiments of the present disclosure, the yellow color index YI value of the copolyamide is 15 or less, and preferably 13 or less, and more preferably 10 or less, and more preferably 7 or less, for example, 2-7, 6 or 5.

After a lot of research, the inventor found that amidogen is a kind of auxochrome, which can make the color of the polymer containing chromophore darker. Using catalyst can reduce the concentration of the amino end groups of the polymer, so as to increase the molecular weight of the polymer to obtain a polymer with better mechanical properties and lower YI value.

In addition, for semi-aromatic polyamides with long carbon chain structure, it is easy to occur such problems as high polymer viscosity and poor melt fluidity in polymerization. At present, increasing the temperature and accelerating the shearing rate are used as common methods to reduce the excessive polymer melt viscosity, but the temperature rise will promote the polymer to appear yellowing phenomena. Adding the end-capping agent can regulate the viscosity of the polymer melt, reduce the cross-linking of amino end groups at high temperature, increase the fluidity of the polymer melt, and decrease the YI value of the polymer.

In another aspect, this disclosure provides a method for preparing a high temperature resistant semi-aromatic copolyamide, comprising the steps of:

1) adding decamethylene diamine, pentamethylene diamine, aromatic diacid and/or derivatives of the aromatic diacid, and aliphatic diacid to water and heating to 70-90°C, and optionally, holding at 70-90°C for 0.5-3h, to obtain a mixture containing polyamide salts;

2) heating the mixture containing polyamide salts to 120-140°C and concentrating the heated product by degassing, and then heating to 240-255°C for reaction; and

3) reducing the pressure of the reaction system by degassing.

The person skilled in the art know that the salt formed by the reaction of diamine and diacid is known as polyamide salt (also known as nylon salt), and polyamide or copolyimide is synthesized through polycondensation of polyamide salt.

Unless otherwise stated or in apparent contradiction, the pressure mentioned in the present disclosure refers to gauge pressure.

In some embodiments of the present disclosure, in step 1) the heating process is carried out under inert gas atmosphere; the inert gas comprises one or more of nitrogen, argon or helium.

In some embodiments of the present disclosure, in step 1) the holding time is 0.5-2h.

In some embodiments of the present disclosure, in step 2) the mixture is concentrated to produce a 40wt.%-80 wt.% of polyamide salt solution, and preferably 55wt.%-65wt.% of polyamide salt solution.

In some embodiments of the present disclosure, in step 2) the reaction time is 0.5-2h, and preferably 1-1.5h.

In some embodiments of the present disclosure, in step 2) the pressure of the reaction system is maintained at 2.5-3 MPa.

In some embodiments of the present disclosure, in step 3) the pressure in reaction system is reduced to 0-0.2MPa (gauge pressure) through degassing.

In some embodiments of the present disclosure, in step 3) the temperature of the reaction system after pressure reduction is 315-335°C.

In some embodiments of the present disclosure, the method includes step 4): vacuumizing treatment: vacuumizing the reaction system to -0.02MPa or less, and preferably -0.05MPa to -0.1MPa. The vacuuming treatment step before melting discharge can avoid a small number of small molecules such as water remaining in the reaction system when the pressure drops to 0 in the pressure relief stage, and these small molecules will degrade the polymer under high temperature environment, and thus affecting the performance of the material.

Optionally, holding the vacuum degree of the reaction system mentioned for 0-300s, preferably 0-90s, and more preferably 5-90s.

In some embodiments of the present disclosure, if the vacuum degree holding time is within the above range, it is beneficial to keep product quality and ensure the copolyamide melt is strand pelletized, thus facilitating the follow-up processing.

In some embodiments of the present disclosure, the method also includes step 5) : discharging, stretching into strips and pelletizing.

In some embodiments of the present disclosure, the method also comprises adding an additive at any stage of step 1), step 2), step 3) and step 4). The additive has the same limitation as above.

In some embodiments of the present disclosure, the method for preparing the high temperature resistant semi-aromatic copolyamide comprises:

1) adding decamethylene diamine, pentamethylene diamine, aromatic diacid and/or derivatives of the aromatic diacid, and aliphatic diacid to water and heating to 70-90°C, and holding at 70-90°C for 0.5-3h, to obtain a mixture containing polyamide salts;

2) heating the mixture containing polyamide salt is heated to 120-140°C, and concentrating the heated product to 40wt.%-80 wt.% of the concentration of the polyamide salt by degassing, and then heating to 240-255°C to react for 0.5-2h at 2.5-3MPa.

3) reducing the pressure of reaction system to 0-0.2MPa (gauge pressure) by degassing, and after that the temperature of the reaction system is 315-335°C;

4) vacuumizing the reaction system to -0.05MPa to -0.1MPa, and the holding the vacuum degree for 0-300s;

5) discharging, stretching into strips and pelletizing.

The parameters for the method have the further limitations mentioned above.

In another aspect, the present disclosure provides a composition, the composition comprises any one of the high temperature resistant semi-aromatic copolyamide mentioned above.

In another aspect, the present disclosure provides a product prepared by using the high temperature resistant semi-aromatic copolyamide mentioned above as a raw material.

In order to obtain the product of the present disclosure, the copolyamide in the present disclosure can be molded by any molding methods such as injection, extrusion, blowing, vacuuming, melt spinning and film forming. The products can be molded into desired shape and used as resin molded products for automotive parts and mechanical parts.

Compared with the existing technologies, the present disclosure has at least the following advantages:

1. the copolyamide of the present disclosure has the same comprehensive performance as the existing polyamide, and can use the monomer pentamethylene diamine developed by independent intellectual property rights, so as to avoid using the monomer hexanediamine monopolized by foreign companies.

2. the copolyamide of the present disclosure has excellent mechanical properties, its tensile properties, bending resistance and impact resistance can be comparable with polyamide PA6, polyamide PA66 and other polyamide products used in the market.

3. the copolyamide of the present disclosure has a lower water absorption and a better dimensional stability, a higher heat distortion temperature and a lower yellow color index, and can be used in a more rigorous environment, thus expanding the use range of the polyamide to a certain extent.

4. the preparation method of the copolyamide of the present disclosure is simple and has such advantages as easy to control the process parameters, no need for large instruments, and convenient for mass production.

**Detailed description**

In order to make the purpose, technical proposal and advantages of the present disclosure more clear, the following paragraph will clearly and completely describe the technical proposal in the disclosure examples. Obviously, the examples described are only part of examples of the present disclosure rather than all of the examples. Based on the examples in the present disclosure, all other examples obtained by ordinary persons skilled in the art without creative work belong to the scope of protection of the disclosure.

1. Detection method of relative viscosity ηr

The relative viscosity is measured by the concentrated sulfuric acid method using the Ubbelohde viscometer, which comprises the steps of: 0.5±0.0002 g of dried polyamide sample is accurately weighed, and dissolved by adding 50 mL of concentrated sulfuric acid (98%), the flow time of the concentrated sulfuric acid t0 and the flow time of the polyamide solution t in a water bath at a constant temperature of 25°C are measured and recorded.

The formula for calculating relative viscosity is as follows:

$$\text{Relative viscosity } \eta r = t/t0$$

wherein t is the flow time of the polyamide solution; t0 is the flow time of the concentrated sulfuric acid solvent.

2. Test method of mechanical properties

Bending strength test according to ISO-178, test condition: 2mm/min;
Tensile strength test according to ISO-572-2, test conditions: 50mm/min;

3. Water absorption test: ISO-62:2008;

4. Heat distortion temperature test: ASTM D648;

5. Yellow color index test

The yellow color index is the yellow color value that uses the C light source of the International Commission on Illumination (CIE) and takes magnesium oxide as reference. The yellow color index YI is calculated as follows: YI = (100(1.28X-1.06Z))/Y, wherein X, Y and Z are the measured tristimulus values respectively. The yellow index instrument is used to detect at the temperature of $25\pm 5$ °Cand relative humidity of $50\pm20\%$.

**Example 1**

9.45 mol of 1, 10-decamethylene diamine, 9.36 mol of terephthalic acid, 0.54 mol of 1, 5-pentamethylene diamine, 0.53 mol of adipic acid, 9.9 g of antioxidant H10 (purchased from BRUGGOLEN, Germany), 7.83g of acetic acid (end-capping agent), 0.66g of sodium hypophosphite (catalyst) were mixed with water evenly, and the thus obtained system was heated to 90°C under a nitrogen atmosphere and was maintained 1h at the temperature to obtain a mixture containing polyamide salt (i.e., nylon salt) with a mass concentration of 50 wt.%;
the reaction system was heated to 130°C and the mass concentration of nylon salt was concentrated to 65wt.% by degassing. Then, the reaction system was further heated to 250°C and the pressure of the reaction system was maintained at 2.5MPa for 1 h for reaction. The pressure of the reaction system was reduced to 0 MPa (gauge pressure) by degassing, and the temperature of the reaction system was 335°C after the pressure reduction. And then the reaction system was vacuumized to -0.07MPa, the copolyamide melt was obtained. After discharging, the copolyamide melt was stretched into strips and pelletized to obtain a high temperature resistant semi-aromatic copolyamide PA10T/5T/56/106.

**Example 2**

9.09 mol of 1,10-decamethylene diamine, 9 mol of terephthalic acid, 1.01 mol of 1, 5-pentamethylene diamine, 1 mol of adipic acid, 9.9 g of antioxidant H10, 7.83g of benzoic acid (end-capping agent), 0.66g of sodium hypophosphite (catalyst) were mixed with water evenly, and the thus obtained system was heated to 90°C under a nitrogen atmosphere and maintained 1h at the temperature to obtain a mixture containing polyamide salt with a mass concentration of 50 wt.%;
the reaction system was heated to 130°C and the mass concentration of nylon salt was concentrated to 65wt.% by degassing. Then, the system was further heated to 250°C and the pressure of the reaction system was maintained at 2.5MPa for 1 h for reaction. The pressure of the reaction system was reduced to 0 MPa (gauge pressure) by degassing, and the temperature of the reaction system was 325°C after the pressure reduction. And then the reaction system was vacuumized to -0.07MPa and was maintained 30s to obtain the copolyamide melt. After discharging, the copolyamide melt was stretched into strips and pelletized to obtain a high temperature resistant semi-aromatic copolyamide PA10T/5T/56/106.

**Example 3**

8.585 mol of 1,10-decamethylene diamine, 8.5 mol of terephthalic acid, 1.5 mol of 1,5-pentamethylene diamine, 1.5 mol of adipic acid, 9.8 g of antioxidant H10, 0.65g of sodium hypophosphite (catalyst), 7.83g of acetic acid (end-capping agent) were mixed with water evenly, and the thus obtained system was heated to 90°C under a nitrogen atmosphere and was maintained 1h at the temperature to obtain a mixture containing polyamide salt with a mass concentration of 50 wt.%;
the reaction system was heated to 130°C and the mass concentration of nylon salt was concentrated to 65wt.% by degassing. Then, the system was further heated to 250°C and the pressure of the reaction system was maintained at 2.5MPa for 1 h for reaction. The pressure of the reaction system was reduced to 0 MPa (gauge pressure) by degassing, and the temperature of the reaction system was 325°C after the pressure reduction. And then the reaction system was vacuumized to -0.07MPa and was maintained 30s to obtain the copolyamide melt. After discharging, the copolyamide melt was stretched into strips and pelletized to obtain a high temperature resistant semi-aromatic copolyamide PA10T/5T/56/106.

**Example 4**

8.08 mol of 1,10-decamethylene diamine, 8 mol of terephthalic acid, 2.02 mol of 1,5-pentamethylene diamine, 2 mol of adipic acid, 9.8 g of antioxidant H10, 0.66g of calcium hypophosphite (catalyst), 7.8 g of cyclohexanecarboxylic acid (end-capping agent) were mixed with water evenly, and the thus obtained system was heated to 90°C under a nitrogen atmosphere and was maintained 1h at the temperature to obtain a mixture containing polyamide salt with a mass concentration of 50 wt.%;
the reaction system was heated to 130°C and the mass concentration of nylon salt was concentrated to 65wt.% by degassing. Then, the system was further heated to 250°C and the pressure of the reaction system was maintained at 2.5MPa for 1 h for reaction. The pressure of the reaction system was reduced to 0 MPa (gauge pressure) by degassing, and the temperature of the reaction system was 325°C after the pressure reduction. And then the reaction system was vacuumized to -0.07MPa and was maintained 70s to obtain the copolyamide melt. After discharging, the copolyamide melt was stretched into strips and pelletized to obtain a high temperature resistant semi-aromatic copolyamide PA10T/5T/56/106.

**Example 5**

It was basically the same as example 3, and the only difference between the example 5 and the example 3 was that the raw materials of the copolyamide PA10T/5T/56/106 of this example 5 did not contain catalyst.

**Example 6**

It was basically the same as example 3, and the only difference between the example 6 and the example 3 was that the raw materials of the copolyamide PA10T/5T/56/106 of this example 5 did not contain end-capping agent.

**Example 7**

8.08 mol of 1,10-decamethylene diamine, 8 mol of terephthalic acid, 2.02 mol of 1,5-pentamethylene diamine, 2 mol of dodecanedioic acid, 10.0 g of antioxidant H10, 0.70g of sodium hypophosphite (catalyst), 8.3 g of cyclohexanecarboxylic acid (end-capping agent) were mixed with water evenly, and the thus obtained system was heated to 90°C under a nitrogen atmosphere and was maintained 1h at the temperature to obtain a mixture containing polyamide salt with a mass concentration of 50 wt.%;
the reaction system was heated to 130°C and the mass concentration of nylon salt was concentrated to 65wt.% by degassing. Then, the reaction system was further heated to 250°C and the pressure of the reaction system was maintained at 2.5MPa for 1 h for reaction. The pressure of the reaction system was reduced to 0 MPa (gauge pressure) by degassing, and the temperature of the reaction system was 325°C after the pressure reduction. And then the reaction system was vacuumized to -0.07MPa and was maintained 60s to obtain the copolyamide melt. After discharging, the copolyamide melt was stretched into strips and pelletized to obtain a high temperature resistant semi-aromatic copolyamide PA10T/5T/512/1012.

**Example 8**

8.585 mol of 1,10-decamethylene diamine, 8.5 mol of terephthalic acid, 1.5 mol of 1,5-pentamethylene diamine, 1.5 mol of hexadecanedioic acid, 10.2 g of antioxidant H10, 0.72g of calcium hypophosphite (catalyst), 8.2g of acetic acid (end-capping agent) were mixed with water evenly, and the thus obtained system was heated to 90°C under a nitrogen atmosphere and was maintained at the temperature for 1h to obtain a mixture containing polyamide salt with a mass concentration of 50 wt.%;
the reaction system was heated to 130°C and the mass concentration of nylon salt was concentrated to 65wt.% by degassing. Then, the reaction system was further heated to 250°C and the pressure of the reaction system was maintained at 2.5MPa for 1 h for reaction. The pressure of the reaction system was reduced to 0 MPa (gauge pressure) by degassing, and the temperature of the reaction system was 325°C after the pressure reduction. And then the reaction system was vacuumized to -0.07MPa and was maintained 30s to obtain the copolyamide melt. After discharging, the copolyamide melt was stretched into strips and pelletized to obtain a high temperature resistant semi-aromatic copolyamide PA10T/5T/516/1016.

**Example 9**

8.585 mol of 1,10-decamethylene diamine, 8.5 mol of terephthalic acid, 1.5 mol of 1,5-pentamethylene diamine, 1.5 mol of adipic acid, 9.8 g of antioxidant H10, 0.65g of sodium hypophosphite (catalyst), 7.83g of acetic acid (end-capping agent) were mixed with water evenly, and the thus obtained system was heated to 90°C under a nitrogen atmosphere and was maintained 1h at the temperature to obtain a mixture containing polyamide salt with a mass concentration of 50 wt.%;
the reaction system was heated to 130°C and the mass concentration of nylon salt was concentrated to 65wt.% by degassing. Then, the reaction system was further heated to 250°C and the pressure of the reaction system was maintained at 2.5MPa for 1 h for reaction. The pressure of the reaction system was reduced to 0 MPa (gauge pressure) by degassing, and the temperature of the reaction system was 325°C after the pressure reduction, the copolyamide melt was obtained. After discharging, the copolyamide melt was stretched into strips and pelletized to obtain a high temperature resistant semi-aromatic copolyamide PA10T/5T/56/106.

**Comparison 1**

(1) Pre-polymerization: 8.585 mol of 1,10-decamethylene diamine, 8.5 mol of terephthalic acid, 1.5 mol of 1,5-pentenediamine, 1.5 mol of adipic acid, 9.8 g of antioxidant, 0.65g of sodium hypophosphite (catalyst), 7.83g of acetic acid (end-capping agent) were mixed with water evenly, and the thus obtained system was heated to 90°C under nitrogen atmosphere and was maintained 1h to get a mixture containing polyamide salt with a mass concentration of 50wt.%. The reaction system was heated to 130°C and concentrated to 65wt.% of the mass concentration of the nylon salt by degassing; and then the system was further heated to 250°C and the pressure of the reaction system was maintained at 2.5MPa for 1 h for reaction. Then, the pressure of the reaction system was reduced to 0 MPa (gauge pressure) by degassing and at the same time the temperature of the reaction system was maintained at 273°C, and the pressure of the reaction system was vacuumized to -0.07MPa and was maintained 30s. And a solid prepolymer was obtained after the reaction system was cooled to room temperature.
(2) Solid-phase polycondensation: the prepolymer was crushed into solid particles with a size of about 0.1mm, and put into the vacuum drum for thickening at 250°C for 8 h, with a vacuum degree of 20-50 Pa, and then was cooled to room temperature to obtain the copolyamide PA10T/5T/56/106.

The copolyamide prepared in example 1 to 9 and comparison 1 was subject to such tests as relative viscosity, tensile strength, bending strength, water absorption, thermal distortion temperature, melting point and yellow color index YI value. The test results were shown in Table 1.

Table 1

| Example | Relative viscosity | Water absorption % | Heat distortion temperature 0°C | Melting point 0°C | Tensile strength MPa | Bending strength MPa | YI value |
|---------|-------------------|--------------------|--------------------------------|-------------------|---------------------|---------------------|----------|
| Example 1 | 2.18 | 0.33 | 118 | 312 | 89 | 110 | 5.9 |
| Example 2 | 2.60 | 0.48 | 111 | 298 | 86 | 108 | 6.2 |
| Example 3 | 2.36 | 0.61 | 102 | 290 | 81 | 105 | 5.6 |
| Example 4 | 2.33 | 0.78 | 96 | 281 | 78 | 100 | 5.0 |
| Example 5 | 1.75 | 0.65 | 94 | 289 | 65 | 98 | 10.2 |
| Example 6 | 2.54 | 0.57 | 102 | 290 | 85 | 108 | 12.2 |
| Example 7 | 2.36 | 0.63 | 94 | 278 | 76 | 98 | 5.5 |
| Example 8 | 2.38 | 0.31 | 100 | 287 | 79 | 102 | 6.0 |
| Example 9 | 1.73 | 0.63 | 102 | 290 | 70 | 83 | 13.4 |

(continued)

| Example | Relative viscosity | Water absorption % | Heat distortion temperature 0°C | Melting point 0°C | Tensile strength MPa | Bending strength MPa | YI value |
|---|---|---|---|---|---|---|---|
| Comparison 1 | 2.01 | 0.70 | 102 | 289 | 74 | 98 | 24.8 |

As can be seen from Table 1, all examples adopted one-step method to prepare copolyamide PA10T/5T/5X/10X, which is easy to operate. Comparison 1 used a two-step method that the copolyamide was prepared by prepolymerization and then solid phase polycondensation, which had such disadvantages as low equipment utilization efficiency and complicated operation. By comparing example 3 with comparison 1, it can be seen that solid-phase polycondensation has a very limited effect on increase in the viscosity of prepolymerization, and YI value of the sample was much higher than that of the sample prepared by one-step method, which may be caused by uneven heating of the sample in the solid phase polycondensation equipment. If the sample yellowed, that indicates that the samples were aged and degraded. As a result, it led to reduction of their mechanical properties.

Finally, it should be noted that the above examples are intended only to explain the technical solutions of the present disclosure, rather than limiting thereto. Although the present disclosure has been described in detail with reference to the forgoing examples, those skilled in the art should understand that modifications can still be made to the technical solutions set forth in the preceding examples, or equivalent substitutions can be made to part or all of the technical features thereof, and these modifications or substitutions do not make the essence of the corresponding technical solutions depart from the scope of the technical solutions in the examples of the present disclosure.

**Claims**

1. A high temperature resistant semi-aromatic copolyamide, **characterized in that** the monomer raw materials of the copolyamide comprise diacid monomers and diamine monomers, the diacid monomers comprise aromatic diacid and/or the derivatives of the aromatic diacid and aliphatic diacid, the diamine monomers comprise decamethylene diamine and pentamethylene diamine, the molar ratio of the decamethylene diamine to the pentamethylene diamine is (1-30): 1.

2. The high temperature resistant semi-aromatic copolyamide according to claim 1, **characterized in that** the decamethylene diamine in the monomer is chemically derived or biological substance derived 1,10-decamethylene diamine, and preferably the biological substance derived 1,10-decamethylene diamine; and/or,

   the pentamethylene diamine in the monomer is chemically derived or biological substance derived pentamethylene diamine, preferably the biological substance derived 1,5-pentamethylene diamine; and/or,
   the molar ratio of the decamethylene diamine to the aromatic diacid is 1: (0.7-1.5), and preferably 1:(0.8-1.2); and/or,
   the molar ratio of the decamethylene diamine to the pentamethylene diamine is (2-30):1, and preferably (2-20):1; and/or,
   the molar ratio of the pentamethylene diamine to the aliphatic diacid is (1-1.3):1, and preferably (1-1.1):1, and more preferably (1-1.06): 1; and/or,
   the molar ratio of the diamine monomer to the diacid monomer is (1-1.3):1, and preferably (1-1.1): 1; and more preferably (1-1.06): 1, and further more preferably (1.01-1.04):1; and/or,
   the total amount of the diamine monomer and the diacid monomer accounts for 85% or more of the total amount of the monomer raw materials of the copolyamide, preferably 90% or more, and more preferably 95% or more, and further more preferably 97% or more, the percentage refers to molar percentage; and/or,
   the total amount of the decamethylene diamine and the pentamethylene diamine accounts for 85% or more of the total amount of the diamine monomer, and preferably 90% or more, and more preferably 95% or more, and the percentage refers to molar percentage; and/or,
   the total amount of the aromatic diacid and/or the derivatives of the aromatic diacid, and the aliphatic diacid accounts for 85% or more of the total amount of the diacid monomer, and preferably 90% or more, and more preferably 95% or more, the percentage refers to molar percentage; and/or,
   the copolyamide is PA10T/5T/5X/10X.

3. The high temperature resistant semi-aromatic copolyamide according to claim 1, **characterized in that** the aromatic diacid is any one of diacids containing benzene rings with 8 or more carbon atoms, or a combination of two or more thereof, and preferably comprising any one of terephthalic acid, isophthalic acid and phthalic acid, or a combination of two or more thereof; and/or,

the derivative of the aromatic diacid comprises but is not limited to any one of paraphthaloyl chloride, dimethyl terephthalate and diethyl terephthalate, or a combination of two or more thereof; and/or,

the aliphatic diacid is any one of an aliphatic diacid with 2-18 carbon atoms and a combination thereof, and preferably comprising any one of oxalic acid, malonic acid, succinic acid, glutaric acid, adipic acid, heptanedioic acid, octanedioic acid, azelaic acid, sebacic acid, undecanedioic acid, dodecanedioic acid, tridecanedioic acid, tetradecanedioic acid, pentadecanedioic acid, hexadecanedioic acid, heptadecanedioic acid, octadecanedioic acid, or a combination of two or more thereof.

4. The high temperature resistant semi-aromatic copolyamide according to claim 1, **characterized in that** the raw materials of the copolyamide further comprise additives accounting for 0.01%-0.03% of the total mass of the monomers, the additives comprise but are not limited to any one of end-capping agent, catalyst, flame retardant, antioxidant, UV absorbent, infrared absorbent, crystallization nucleating agent, fluorescent brightening agent and antistatic agent, or a combination of two or more thereof; and/or,

the raw materials of the copolyamide also comprise antioxidants accounting for 0.1%-0.5% of the total mass of the monomer, the antioxidants comprise any one of phenolic antioxidant, inorganic phosphate antioxidant, phosphite ester antioxidant and carbon free radical trapping antioxidant, or a combination of two or more thereof; and/or, the raw materials of the copolyamide further comprise catalysts accounting for 0-0.07% of total mass of the monomer, and preferably 0.005-0.05%, the catalysts comprise phosphate and hypophosphite, and preferably comprise phosphate of alkali metal and/or alkaline-earth metal, and hypophosphite of alkali metal and/or alkaline-earth metal, and more preferably comprise any one of potassium hypophosphite, sodium hypophosphite, calcium hypophosphite and magnesium hypophosphate, or a combination of two or more thereof; and/or, the raw materials of the copolyamide also comprise end-capping agents accounting for 0-1% of the total mass of the monomer, and preferably 0.1-0.5%, the end-capping agents comprise any one of $C_2$-$C_{16}$ aliphatic carboxylic acid and $C_7$-$C_{10}$ aromatic carboxylic acid or a combination thereof, the end-capping agents comprise for example any one of acetic acid, propionic acid, butyric acid, valeric acid, caproic acid, heptanoic acid, caprylic acid, pelargonic acid, capric acid, trimethylacetic acid, isobutyric acid, benzoic acid, cyclohexanecarboxylic acid, toluic acid, $\alpha$-naphthoic acid, $\beta$-naphthoic acid, methylnaphthoic acid and phenylacetic acid, or a combination of two or more thereof.

5. The high temperature resistant semi-aromatic copolyamide according to any one of claims 1-4, **characterized in that** the melting point of the copolyamide is 270°C or more, and preferably 270°C-310°C; and/or,

the heat distortion temperature of the copolyamide is 95-130°C and preferably 100-125°C; and/or, the water absorption of the copolyamide is 0.1-1%, and preferably 0.2-0.8%; and/or, the relative viscosity of the copolyamide is 1.0-3.2, and preferably 2.2-3.0, and more preferably 2.2-2.6; and/or, the tensile strength of the copolyamide is 50-140MPa and preferably 60-120MPa, and more preferably 70-110MPa; and/or, the bending strength of the copolyamide is 70-130MPa and preferably 85-130MPa, and more preferably 90-130MPa; and/or, the yellow color index YI value of the copolyamide is 15 or less, and preferably 13 or less, and more preferably 10 or less, and more preferably 7 or less.

6. A method for preparing high temperature resistant semi-aromatic copolyamide, **characterized in that** the method comprises the steps of:

1) adding decamethylene diamine, pentamethylene diamine, aromatic diacid and/or derivatives of the aromatic diacid, and aliphatic diacid to water and heating to 70-90°C, and optionally holding at 70-90°C for 0.5-3h to obtain a mixture containing polyamide salts;

2) heating the mixture containing polyamide salts to 120-140°C and concentrating the heated product by degassing, then heating to 240-255°C for reaction; and

3) reducing the pressure of the reaction system by degassing.

7. The method according to claim 6, **characterized in that** the heating process in step 1) is carried out under inert gas atmosphere; and/or,

   in step 1), the holding time is 0.5-2h; and/or,
   in step 2), concentrating the heated product is to produce a 40wt.%-80 wt.%, preferably 55wt.%-65wt.% of polyamide salt solution; and/or
   in step 2), the reaction time is 0.5-2h, and preferably 1-1.5h; and/or,
   in step 2), the pressure of the reaction system is maintained at 2.5-3 MPa; and/or,
   in step 3), the pressure in reaction system is reduced to 0-0.2MPa (gauge pressure) through degassing; and/or,
   in step 3), the temperature of the reaction system after pressure reduction is 315-335°C; and/or,
   the method comprises step 4): vacuumizing treatment including vacuumizing the reaction system to -0.02MPa or less, and preferably -0.05MPa to -0.1MPa, optionally, holding the vacuum degree of the reaction system for 0-300s, and preferably 0-90s, more preferably 5-90s; and/or,
   the method comprises step 5): discharging, stretching into strips and pelletizing.

8. The method according to claim 6 or 7, **characterized in that** the method comprises adding an additive at any stage of step 1), 2), 3) and 4), the additive accounts for 0.01%-3% of the total mass of the monomer, the additive comprises but is not limited to any one of an end-capping agent, a catalyst, flame retardants, an antioxidant, UV absorbent, infrared absorbent, crystallization nucleating agent, fluorescent brightening agent and antistatic agent, or a combination of two or more thereof.

9. A composition, **characterized in that** the composition comprises the high temperature resistant semi-aromatic copolyamide according to any one of claims 1-5.

10. A product prepared by using the high temperature resistant semi-aromatic copolyamide according to any one of claim 1-5 as a raw material.

## INTERNATIONAL SEARCH REPORT

| International application No. |
|---|
| **PCT/CN2022/074273** |

| A. | CLASSIFICATION OF SUBJECT MATTER |
|---|---|

C08G 69/26(2006.01)i; C08G 69/28(2006.01)i; C08L 77/06(2006.01)i

According to International Patent Classification (IPC) or to both national classification and IPC

| B. | FIELDS SEARCHED |
|---|---|

Minimum documentation searched (classification system followed by classification symbols)

C08G69; C08L77

Documentation searched other than minimum documentation to the extent that such documents are included in the fields searched

Electronic data base consulted during the international search (name of data base and, where practicable, search terms used)

CNTXT; ENTXT; CJFD; DWPI: 十?碳二元酸, 戊二胺, Nylon, Pentadecadibasic acid, Tetradecanedioic acid, 半芳族, Semi? aromatic, 聚酰胺, Undecadibasic acid, Partial aroma+, Partially aromatic, 癸二胺, ?苯二甲酸, +phthalic acid, Sebacic acid, Oxalic acid, Polyamide, Succinic acid, 部分芳族, Adipic acid, Hexadecadibasic acid, Octadecadibasic acid, Malonic acid, Suberic acid, 部分芳香, Azelaic acid, Decanediamine, 尼龙, Glutaric acid, 半芳香, ?二酸, Dodecanedioic acid, Pimelic acid, Heptadecanedioic acid, pentanediamine

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 108383996 A (KINGFA SCIENCE & TECHNOLOGY CO.; ZHUHAI WANTONG SPECIAL ENGINEERING PLASTIC CO., LTD.) 10 August 2018 (2018-08-10) see description, paragraphs 12-34 | 1-5, 9-10 |
| Y | CN 108383996 A (KINGFA SCIENCE & TECHNOLOGY CO.; ZHUHAI WANTONG SPECIAL ENGINEERING PLASTIC CO., LTD.) 10 August 2018 (2018-08-10) see description, paragraphs 12-34 | 6-8 |
| Y | CN 103360598 A (SHANGHAI GENIUS ADVANCED MATERIAL GROUP CO., LTD.) 23 October 2013 (2013-10-23) see description, paragraphs 17-27 | 6-8 |
| X | CN 110885442 A (ZHENGZHOU UNIVERSITY; ZHENGZHOU UNIVERSITY OF INDUSTRIAL TECHNOLOGY RESEARCH INSTITUTE CO., LTD.) 17 March 2020 (2020-03-17) see description, paragraphs 4-37 | 1-5, 9-10 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **19 April 2022** | **26 April 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
| --- |
| **PCT/CN2022/074273** |

| C. | DOCUMENTS CONSIDERED TO BE RELEVANT | |
| --- | --- | --- |
| Category* | Citation of document, with indication, where appropriate, of the relevant passages | Relevant to claim No. |
| Y | CN 110885442 A (ZHENGZHOU UNIVERSITY; ZHENGZHOU UNIVERSITY OF INDUSTRIAL TECHNOLOGY RESEARCH INSTITUTE CO., LTD.) 17 March 2020 (2020-03-17)<br>see description, paragraphs 4-37 | 6-8 |
| A | CN 110982063 A (ZHONGLUN PLASTIC INDUSTRY (FUJIAN) CO., LTD.) 10 April 2020 (2020-04-10)<br>see entire document | 1-10 |
| A | CN 110294842 A (KINGFA SCIENCE & TECHNOLOGY CO.; ZHUHAI WANTONG SPECIAL ENGINEERING PLASTIC CO., LTD.) 01 October 2019 (2019-10-01)<br>see entire document | 1-10 |
| A | CN 112724400 A (NANJING KAICHUANG NEW MATERIAL TECHNOLOGY CO., LTD.; JIANGSU JICUI ADVANCED HIGH MOLECULAR MAT INSTITUTE CO., LTD.) 30 April 2021 (2021-04-30)<br>see entire document | 1-10 |
| A | CN 103923313 A (ZHUZHOU TIMES NEW MATERIAL TECHNOLOGY CO., LTD.) 16 July 2014 (2014-07-16)<br>see entire document | 1-10 |
| A | CN 110028665 A (SHANGHAI CATHAY BIOTECHNOLOGY RESEARCH CENTER CO., LTD.; CATHAY INDUSTRIAL BIOTECH LTD.) 19 July 2019 (2019-07-19)<br>see entire document | 1-10 |
| A | CN 103387667 A (SHANGHAI CATHAY R&D CENTER CO., LTD.) 13 November 2013 (2013-11-13)<br>see entire document | 1-10 |
| A | JP 2006002113 A (KURARAY CO.) 05 January 2006 (2006-01-05)<br>see entire document | 1-10 |
| A | JP 2015178562 A (UBE INDUSTRIES) 08 October 2015 (2015-10-08)<br>see entire document | 1-10 |
| A | US 2011189419 A1 (ARKEMA FRANCE) 04 August 2011 (2011-08-04)<br>see entire document | 1-10 |

Form PCT/ISA/210 (second sheet) (January 2015)

**INTERNATIONAL SEARCH REPORT**
Information on patent family members

International application No.

**PCT/CN2022/074273**

| Patent document cited in search report | | | Publication date (day/month/year) | Patent family member(s) | | | Publication date (day/month/year) |
|---|---|---|---|---|---|---|---|
| CN | 108383996 | A | 10 August 2018 | WO | 2019137303 | A1 | 18 July 2019 |
| CN | 103360598 | A | 23 October 2013 | | None | | |
| CN | 110885442 | A | 17 March 2020 | | None | | |
| CN | 110982063 | A | 10 April 2020 | | None | | |
| CN | 110294842 | A | 01 October 2019 | WO | 2020238440 | A1 | 03 December 2020 |
| CN | 112724400 | A | 30 April 2021 | | None | | |
| CN | 103923313 | A | 16 July 2014 | | None | | |
| CN | 110028665 | A | 19 July 2019 | | None | | |
| CN | 103387667 | A | 13 November 2013 | | None | | |
| JP | 2006002113 | A | 05 January 2006 | | None | | |
| JP | 2015178562 | A | 08 October 2015 | | None | | |
| US | 2011189419 | A1 | 04 August 2011 | EP | 2297226 | A2 | 23 March 2011 |
| | | | | WO | 2010004199 | A2 | 14 January 2010 |
| | | | | FR | 2933414 | A1 | 08 January 2010 |
| | | | | CN | 102089353 | A | 08 June 2011 |

Form PCT/ISA/210 (patent family annex) (January 2015)

**EP 4 357 391 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 101759853 B